# EUROPEAN PATENT APPLICATION

(11) **EP 3 944 072 A1**
(43) Date of publication of application: **26.01.2022**
(21) Application number: 20186853.6
(22) Date of filing: 21.07.2020
(51) Int. Cl.: G06F 8/60, G06F 11/36, G06F 8/71

(54) **A DEVELOPMENT SYSTEM FOR DEVELOPING DIFFERENT SOFTWARE APPLICATIONS**

(71) Applicant: VOLKSWAGEN AG, 38440 Wolfsburg (DE)
(72) Inventor: COENEN, Harm, 2993 LL Barendrecht (NL)

(57) **Abstract**

The invention provides a development system (100) for developing different software applications, especially for a plurality of vehicles having different feature sets and/or different hardware sets,
comprising the following elements:
- a repository server (10) with a software repository (11), wherein the software repository (11) comprises source code files for at least one of the different software applications from at least one source code provider (101), and a converting tool (20) for checking out the source code files into artifacts,
- an artifact repository (21) for archiving the artifacts checked out from the software repository (11), especially using job-names and/or job-runs,
- and a build tool (30) for deploying a version of at least one of the different software applications,
wherein artifact repository (21) is provided remotely from the build tool (30) on at least one backend device (102),
and wherein the build tool (30) is configured to download the artifacts from the artifact repository (21).

## Description

The invention relates to a development system for developing different software applications, especially for a plurality of vehicles having different features sets and/or different hardware sets, according to the independent method claim. Further, the invention relates to a method for operating a corresponding development system according to the independent method claim. Moreover, the invention relates to a computer program product for a corresponding method according to the independent product claim.

In software development build processes are basically known. The builds include processes of converting source code files provided by different source code providers into standalone software artifacts, for example binary files. Builds will usually be executed regularly, for example at night, when it is assumed that source code providers do not work on source code files. During such builds, the software artifacts can be tested and merged together to ready software versions. Usually a master storage disk will be provided within the build workspace for storing the artifacts. The artifacts can then be copied from the artifact storage to the corresponding testing tool. However, the master storage disk size is often limited, for example to 100 TB. All artifacts (that are build output binaries) are stored on the master storage disk. Many important builds need to be kept for an extended period of time, for example 1 to 15 years, and less important builds need to be kept for at least 40 days. Since there are many variants being built every night, the disk capacity is often not enough to keep all the artifacts.

An objective of embodiments of the present invention is to provide a development system for developing different software applications, especially for a plurality of vehicles having different feature sets and/or different hardware sets, with improved functionality. It is especially an objective of embodiments of the present invention to provide a development system for developing different software applications, especially for a plurality of vehicles having different feature sets and/or different hardware sets, which allows flexible and/or long term storage of artifacts. Additionally, an objective of embodiments of the invention is to provide an improved method for operating such a development system as well as a corresponding computer program product for such method.

According to a first aspect, embodiments of the invention provide a method for operating a development system for developing different software applications, especially for a plurality of vehicles having different feature sets and/or different hardware sets, with the features of the independent method claim. According to a second aspect, embodiments of the invention provide a computer program product for a corresponding method with the features of the independent product claim. According to a third aspect, embodiments of the invention provide a corresponding development system for developing different software applications, especially for a plurality of vehicles having different feature sets and/or different hardware sets, with the features of the independent system claim. Details and features disclosed on individual aspects of the invention also apply to the other aspects of the invention and vice versa.

According to the first aspect, embodiments of the invention provide a development system for developing different software applications, especially for a plurality of vehicles having different feature sets and/or different hardware sets,
comprising the following elements:
- a repository server with a software repository, wherein the software repository comprises at least one source code file for at least one of the different software applications from at least one source code provider, and a converting tool for checking out the at least one source code file into artifacts,
- an artifact repository for archiving the artifacts checked out from the software repository, especially using job-names and/or job-runs, and
- a build tool for deploying a version of at least one of the different software applications,
wherein the artifact repository is provided remotely from the build tool on at least one backend device, for example in a cloud, and wherein the build tool is configured to download the artifacts from the artifact repository.

The development system is a system for software development, including hardware and/or software components such as at least one repository server (serving also as version control tool or version management tool), at least one converting tool (that is checking out or, in other words, compiling and/or linking tool) and at least one build tool (serving as a build workspace or a build pipeline, including a test tool, a stage tool and/or a deploy tool). The development system according to the invention can be configured as a continuous deployment system or as a continuous delivery system, for example using Jenkins architecture.

Different software applications may comprise safety, intelligence, environmental and customer friendliness as well as comfortable and enjoyable applications. A plurality of vehicles may comprise various kinds of vehicles using different feature sets and/or different hardware sets. Thus, a plurality of vehicles may require a variety of different software applications dependent on the different feature sets and/or the different hardware sets.

For all these software applications, source codes will be continuously developed and updated by the development system. For this purpose, various source code providers (for example human developers, developer groups and/or computing units comprising artificial intelligence features) are working on source code files for corresponding software applications.

A job within the meaning of the invention can include a development of at least one part of the at least one source code file for at least one corresponding software application.

The software repository is configured to provide a large enough storage size for the multiple software applications, for example at least 200 GB.

The artifact repository is configured to provide a large enough storage size for artifacts of the multiple software applications, for example at least 100 TB.

The idea is that the build artifacts are no longer stored on a master storage disk, for example a Jenkins master instance, but in a remote backend device, for example in a cloud. Cloud storage is a simple and cost-effective way to store data. Thus, the artifact repository can be provided as a relatively large and/or arbitrarily large repository. To access the artifact storage from within the build-run a few scripts, for example python scripts, can be created, which can use especially the python module boto3. The created scripts, for example python scripts, can archive, download, tag, list and delete the artifacts from/to the artifact storage. The artifacts can be stored in the artifact repository using a job-name, for example Jenkins job-name, and a job-run to identify the artifacts. The build tool does not copy the artifacts from the master storage disk but downloads the artifacts from the artifact repository using the job-name and the job-run to identify the artifacts.

An advantage of the invention is therefore a development system for developing different software applications, especially for a plurality of vehicles having different feature sets and/or different hardware sets, with improved functionality, which allows flexible and/or long term storage of artifacts.

In some embodiments the build tool is configured to archive, tag, list and/or delete artifacts from the artifact repository. Thus, full functionality of a build workspace is assured without limits for the storage of artifacts.

In some embodiments the build tool is provided locally on the repository server or remotely on at least one backend device, especially in a cloud. Since, the accommodation place for the artifact repository is decoupled from the master storage disk of the build tool, the accommodation place for the build tool itself can be flexibly provided. Thus, the flexible usage of the development system can be improved.

In some embodiments a connection line is provided between the build tool and the artifact repository to facilitate one or more of download, archive, tag, list, combine and/or delete artifacts from the artifact repository. In this way, a functional connection can be achieved between the build tool and the artifact repository.

In some embodiments the artifact repository is configured as a table mapping the artifacts to different jobs and/or to different build-runs. Thus, the artifacts can be easily identified between the build tool and the artifact repository.

According to the second aspect, embodiments of the invention provide a method for operating a development system for developing different software applications, especially for a plurality of vehicles having different features sets and/or different hardware sets, the method comprising:
- providing a software repository on a repository server, wherein the software repository comprises at least one source code file for at least one of the different software applications from at least one source code provider,
- checking out the software repository by a converting tool, wherein the converting tool serves for checking out the at least one source code file into artifacts,
- providing an artifact repository for archiving the artifacts checked out from the software repository remotely from the build tool on at least one backend device,
- transmitting, especially downloading, the artifact repository from the at least one backend device to a build tool in order to provide the build of the software repository.

With the help of the abovementioned method, the same advantages can be achieved as with the help of the development system described above. Full reference is made to these advantages in the present case.

The method steps can be carried out in the given order or in an at least partly modified order, and/or the method steps can be carried out at least partly simultaneously and/or successively, and/or the method steps can be carried out repeatedly.

In some embodiments the checking out of the software repository is executed in at least two stages:
wherein a first stage of the at least two stages includes:
   - checking out the software repository by the converting tool in order to provide the artifact repository at a first time prior to a start of a build,
and wherein a second stage of the at least two stages includes:
   - checking out the at least one update of the software repository by the converting tool in order to complete the artifact repository for the build at a second time.

Thus, the checking out (compiling and/or linking) of the (relatively large) software repository on all the build nodes can be executed prior to a planned start of an actual build. This can be done during times when there is no or only low activity (preferably right after the previous build-run). Often such builds will therefore be executed at night, as it is assumed that source code providers do not work on source code files at that time. Such builds may be referred to as nightly builds. The term "nightly build" throughout this specification refers to a build executed at a low activity time at the source code provider side, e.g. at night or in the weekend. When a new build starts, the main part of the software repository is already available on all the build nodes. Only an update can be made to a mirror workspace, which is usually a small amount of data in comparison to the size of the whole software repository. This is the delta since the last check-out time and the new build. Once the mirror workspace, and thus the update of the software repository, is checked out to the artifact repository, a download of the completed artifact repository can be made to the build tool and the build can start. Thus, no noticeable delay in the build occur even for relatively large and/or arbitrarily large software repository.

In some embodiments, prior to the first stage of the at least two stages, the method further comprises monitoring the activity of the least one source code provider. Thus, the times with no or only low activity can be recognized in order to estimate an optimal first time to check-out the software repository.

In some embodiments checking out the software repository in the first stage of the at least two stages is only executed, when no activity or only small activity is detected by the least one source code provider. Thus, it can be assured that the source code provider is not disturbed by working on source code files.

In some embodiments the first time is determined as a time lying (just) after a previous build-run, especially between 1 sec and 10 min, preferably between 10 sec and 1 min, after a previous build-run. Thus, the main part of the software repository can be checked out to the artifact repository at a preferable moment, when the main part of the software repository is already available on all the build nodes.

In some embodiments at least one update of the software repository in the second stage is provided via a mirror workspace of the repository server. Thus, the delta between the last build and the new build can be easily determined to provide the at least one update of the software repository for completing the artifact repository for the new build.

In some embodiments the software repository is provided as a repository server mounted in build nodes, so that checking out is provided by copying the software repository and/or at least one update of the software repository to the artifact repository. Thus, a copy of the raw repository data to the mirror workspace can already provide a ready artifact repository. In this way, time can be saved by the build since the mount point is a faster connection.

In some embodiments the method further comprises:
- performing at least one test on a build of the software repository by a test tool to deploy a version of the at least one of the different software applications, and/or
- testing a version of the at least one of the different software applications by a deployment tool on at least one test vehicle, and/or
- installing a version of the at least one of the different software applications by a deployment tool on at least one user vehicle.

With the help of the performing as defined above the at least one source code file can be retrieved having the best quality for check in into the software repository. With the help of the testing as defined above a new version of the at least one software application can be delivered when a certain quality metric is reached. With the help of the installing as defined above the at least one software application can go into the production fully automated.

According to the third aspect, embodiments of the invention provide a computer program product comprising a program code for carrying out a method as described above. In particular, the computer program product comprises instructions which, when the program is executed by a computer, cause the computer to carry out a method as described above. With the help of the computer program product the same advantages can be achieved as with the help of the method described above. Full reference is made to these advantages in the present case.

The invention and its further developments, as well as its advantages, will be explained in more detail below using the following figure:

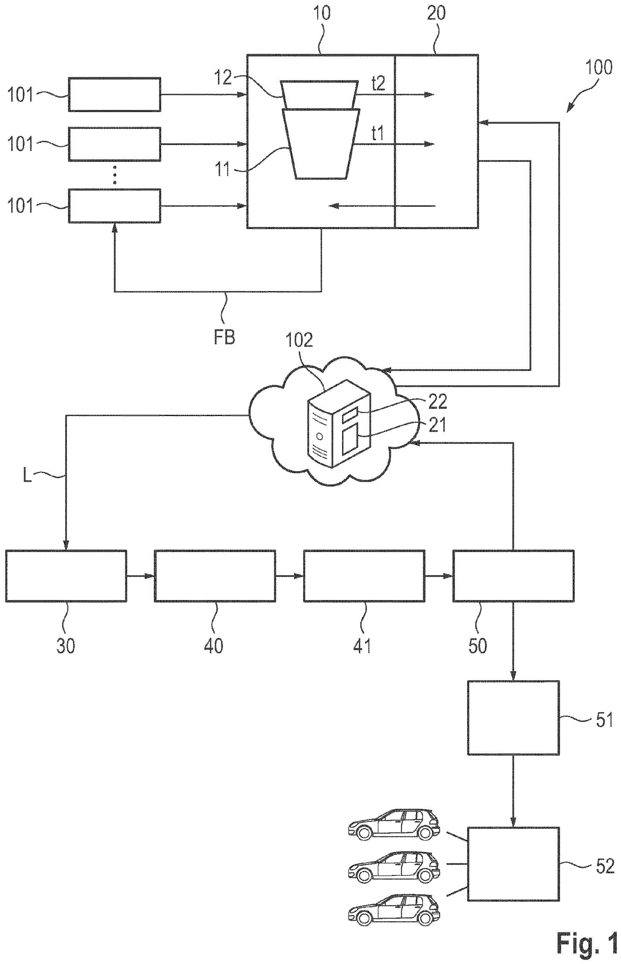

Fig. 1 shows a schematic view of a development system within the meaning of the invention.

Figure 1 shows a schematic development system 100 within the meaning of the invention for developing different software applications, especially for a plurality of vehicles having different feature sets and/or different hardware sets, preferably during executing of builds, e.g. nighlty builds. The development system 100 comprises the following elements:
- a repository server 10 with a software repository 11, wherein the software repository 11 comprises source code files for at least one of the different software applications from at least one source code provider 101, and a converting tool 20 for checking out the source code files into artifacts,
- an artifact repository 21 for archiving the artifacts checked out from the software repository 11, especially using job-names and/or job-runs, and
- a build tool 30 for deploying a version of at least one of the different software applications.

The artifact repository 21 is provided remotely from the build tool 30 on at least one backend device 102, for example in a cloud. The build tool 30 is configured to download the artifacts from the artifact repository 21.

The development system 100 according to the invention is constructed as a system for software development. It may include hardware and/or software components. The development system 100 comprises at least one repository server 10 serving also as a version management tool for the software repository 11.

The converting tool 20 serves for checking out or (that is compiling and/or linking) source code files provided by the software repository 11.

The build tool 30 serves as a build workspace or a build pipeline, including a test tool 40, a stage tool 41, a deploy tool 50 and so on. The development system according to the invention can be configured as a continuous deployment system or as a continuous delivery system, for example using Jenkins architecture.

Tested and merged artifacts will be transmitted to the artifact repository 21 after the build-run is completed. From the artifact repository 21 tested and merged artifacts can be checked in to the software repository 11 on the repository server 10 to provide a version of the at least one software application.

Different software applications according to the invention can comprise safety, intelligence, environmental and customer friendliness as well as comfortable and enjoyable applications in vehicles provided with different feature sets and/or different hardware sets.

The invention suggests to no longer store build artifacts on a master storage disk of the build tool 30, for example a Jenkins master instance, but in a remote backend device 102, for example in a cloud. A cloud can provide a simple and cost-effective way to store data. Therefore, the inventive artifact repository 21 can be provided with the desired size without the necessity to delete older artifacts. To access the artifact storage 21 from the build tool 30 a connection line L can be provided with the help of a few scripts. The connection line L can help to archive, download, tag, list and delete the artifacts from/to the artifact storage 21. The artifacts can be mapped in the artifact repository 21 using a job-name, for example Jenkins job-name, and a job-run to identify the artifacts. The build tool 30 does not copy the artifacts from the master storage disk but downloads the artifacts from the artifact repository 21 using the job-name and the job-run to identify the artifacts. Thus, a development system 100 for developing different software applications, especially for a plurality of vehicles having different feature sets and/or different hardware sets, with improved functionality can be provided, which allows flexible and/or long term storage of artifacts.

The build tool 30 itself can be provided locally on the repository server 10 or remotely on at least one backend device 102, especially in a cloud, because the accommodation place for the artifact repository 21 is decoupled from the master storage disk of the build tool 30.

The second aspect of the invention represents a method for operating a development system 100 for developing different software applications, especially for a plurality of vehicles having different feature sets and/or different hardware sets, according to one of the preceding claims, comprising the following steps:
1) providing a software repository 11 on a repository server 10, wherein the software repository 11 comprises source code files for at least one of the different software applications from at least one source code provider 101,
2) checking out the software repository 11 by a converting tool 20, wherein the converting tool 20 serves for checking out the source code files into artifacts,
3) providing an artifact repository 21 for archiving the artifacts checked out from the software repository 11 remotely from a build tool 30 on at least one backend device 102,
4) transmitting, especially downloading, the artifact repository 21 from the at least one backend device 102 to the build tool 30 in order to provide the build of the software repository 11.

Preferably, the method steps according to the invention can be carried out repeatedly to provide continuous updating of the software repository 11 and an automatic versioning of the software repository 11. The method steps according to the invention can be carried out at least partly simultaneously and/or successively.

As the figure 1 schematically shows, the checking out of the software repository 11 in step 2) can be executed in at least two stages:
wherein a first stage of the at least two stages including:
   - checking out the software repository 11 by the converting tool 20 in order to provide the artifact repository 21 at a first time t1 prior to a start of a build,
and wherein a second stage of the at least two stages including:
   - checking out the at least one update 12 of the software repository 11 by the converting tool 20 in order to complete the artifact repository 21 for the build at a second time t2.
At the time t1 the main part of the software repository 21 is available on all build nodes. When the actual build starts at the second time t2, only an update 12 of the software repository 11 can be checked out to the artifact repository 21. Then, the completed artifact repository 21 can be downloaded to the build tool 30 and the build can start. Thus, no noticeable delay in the build occur even for a very large software repository 11.

Advantageously it is possible that prior to the first stage of the at least two stages of step 2) at least one method step can be provided:
2a) monitoring the activity of the at least one source code provider 101, so that checking out the software repository 11 in the first stage of the at least two stages of step 2) is only executed when no activity or only small amounts of activity are detected by the at least one source code provider 101.

The first time t1 can be, for example, determined as a time moment lying just after a previous build-run, especially 1 sec to 10 min, preferably 10 sec to 1 min, after a previous build-run.

Furthermore the figure 1 shows that the invention may provide within a method for operating a development system at least one of the following steps:
6) performing at least one test on a build of the software repository 11 by a test tool 40 to deploy a version of the at least one of the different software applications, and/or
7) testing a version of the at least one of the different software applications by a deployment tool 50 on at least one test vehicle 51, and/or
8) installing a version of the at least one of the different software applications by a deployment tool 50 on at least one user vehicle 52.

Thus, a new version of the at least one software application can be deployed and provided as a version or automatically installed application.

In the embodiments described above, the build may be a nightly build.

The above description of the figures describes the present invention only in the context of examples. Of course, individual features of the embodiments can be combined with each other, provided it is technically reasonable, without leaving the scope of the invention.

### Reference signs

- 100: development system

- 10: repository server
- 11: software repository

- 20: converting
- 21: artifact repository

- 30: build tool

- 40: test tool
- 41: stage tool

- 50: deploy tool
- 51: test vehicle
- 52: user vehicle

- 101: source code provider
- 102: backend device

- FB: feedback

## Claims

1. A development system (100) for developing different software applications, especially for a plurality of vehicles having different feature sets and/or different hardware sets, comprising the following elements:
- a repository server (10) with a software repository (11), wherein the software repository (11) comprises at least one source code file for at least one of the different software applications from at least one source code provider (101), and a converting tool (20) for checking out the at least one source code file into artifacts,
- an artifact repository (21) for archiving the artifacts checked out from the software repository (11), and
- a build tool (30) for deploying a version of at least one of the different software applications,
wherein the artifact repository (21) is provided remotely from the build tool (30) on at least one backend device (102), and
wherein the build tool (30) is configured to download the artifacts from the artifact repository (21).

2. The development system (100) according to claim 1,
**characterized in that**
the build tool (30) is configured to archive, tag, list and/or delete artifacts from the artifact repository (21).

3. The development system (100) according to claim 1 or 2,
**characterized in that**
the build tool (30) is provided locally on the repository server (10) or remotely on at least one backend device (102), especially in a cloud.

4. The development system (100) according to any one of the preceding claims,
**characterized in that**
a connection line (L) is provided between the build tool (30) and the artifact repository (21) to facilitate at least one of download, archive, tag, list, combine and/or delete artifacts from the artifact repository (21).

5. The development system (100) according to any one of the preceding claims,
**characterized in that**
the artifact repository (21) is configured as a table mapping the artifacts to different jobs and/or to different build-runs.

6. The development system (100) according to the preceding claim,
**characterized in that**
the development system (100) is configured as a continuous deployment system or as a continuous delivery system.

7. A method for operating a development system (100) for developing different software applications, especially for a plurality of vehicles having different feature sets and/or different hardware sets, according to one of the preceding claims,
the method comprising:
- providing a software repository (11) on a repository server (10), wherein the software repository (11) comprises at least one source code file for at least one of the different software applications from at least one source code provider (101),
- checking out the software repository (11) by a converting tool (20), wherein the converting tool (20) serves for checking out the at least one source code file into artifacts,
- providing an artifact repository (21) for archiving the artifacts checked out from the software repository (11) remotely from a build tool (30) on at least one backend device (102),
- transmitting, especially downloading, the artifact repository (21) from the at least one backend device (102) to the build tool (30) in order to provide the build of the software repository (11).

8. The method according to the preceding claim,
**characterized in that**
the checking out of the software repository (11) is executed in at least two stages:
wherein a first stage of the at least two stages including:
- checking out the software repository (11) by the converting tool (20) in order to provide the artifact repository (21) at a first time (t1) prior to a start of a build,
and wherein a second stage of the at least two stages including:
- checking out the at least one update (12) of the software repository (11) by the converting tool (20) in order to complete the artifact repository (21) for the build at a second time (t2).

9. The method according to any one of the preceding claim,
**characterized in that**
prior to the first stage of the at least two stages, the method further comprises monitoring the activity of the least one source code provider (101), and/or **characterized in that** checking out the software repository (11) in the first stage is only executed if no activity or only small amounts of activity are detected by the at least one source code provider (101).

10. The method according to claim 8 or claim 9,
**characterized in that**
the first time (t1) is determined as a time lying after a previous build-run, especially between 1 sec to 10 min, preferably between 10 sec to 1 min, after a previous build-run.

11. The method according to any one of claims 8-10,
**characterized in that**
at least one update (12) of the software repository (11) in the second stage is provided via a mirror workspace of the repository server (10).

12. The method according to any one of the preceding claims,
**characterized in that**
the software repository (11) is provided as a repository server mounted in build nodes, so that checking out is provided by copying the software repository (11) and/or at least one update (12) of the software repository (11) to the artifact repository (21).

13. The method according to any one of the preceding claims,
**characterized in that**
the method further comprises:
- performing at least one test on a build of the software repository (11) by a test tool (40) to deploy a version of the at least one of the different software applications, and/or
- testing a version of the at least one of the different software applications by a deployment tool (50) on at least one test vehicle (51), and/or
- installing a version of the at least one of the different software applications by a deployment tool (50) on at least one user vehicle (52).

14. The method according to any one of the preceding claims,
**characterized in that**
the method steps are carried out in the given order or in an at least partly modified order, and/or the method steps are carried out at least partly simultaneously and/or successively,
and/or the method steps are carried out repeatedly.

15. A computer program product comprising instructions which, when the program is executed by a computer, cause the computer to carry out a method according to any one of the preceding claims.
